(19) Europäisches Patentamt
European Patent Office
Office européen des brevets

(11) **EP 4 005 737 A1**

(12) **EUROPÄISCHE PATENTANMELDUNG**

(43) Veröffentlichungstag:
**01.06.2022  Patentblatt 2022/22**

(21) Anmeldenummer: **20210234.9**

(22) Anmeldetag: **27.11.2020**

(51) Internationale Patentklassifikation (IPC):
**B25F 5/00** (2006.01)   **H02J 7/14** (2006.01)

(52) Gemeinsame Patentklassifikation (CPC):
**B25F 5/00; H02J 7/0013; H02J 7/0063; H02J 7/34**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder: **Kuhlmann, Kevin**
**86916 Kaufering (DE)**

(74) Vertreter: **Hilti Aktiengesellschaft**
**Corporate Intellectual Property**
**Feldkircherstrasse 100**
**Postfach 333**
**9494 Schaan (LI)**

(54) **STEUERUNGSVERFAHREN FÜR EINE AKKUBETRIEBENE HANDWERKZEUGMASCHINE, AKKUBETRIEBENE HANDWERKZEUGMASCHINE UND COMPUTERPROGRAMMPRODUKT**

(57)     Das erfindungsgemäße Steuerungsverfahren für eine akkubetriebene Handwerkzeugmaschine (1) umfasst die Schritte:
Ermitteln (S1) eines jeweiligen Zustandsparameters (U10, U20) einer Anzahl von mit der Handwerkzeugmaschine (1) über eine jeweilige Stromleitung (11, 21) elektrisch parallel verbundenen Akkueinheiten (10, 20),
Ermitteln (S2) eines jeweiligen Steuersignals (SIG1, SIG2) für jede verbundene Akkueinheit (10, 20) in Abhängigkeit des ermittelten Zustandsparameters (U10, U20), und
Schalten (S3) eines Schaltzustands eines in der jeweiligen Stromleitung (11, 21) angeordneten Schalters (12, 22) in Abhängigkeit des jeweiligen Steuersignals (SIG1, SIG2).

Fig. 1

EP 4 005 737 A1

**Beschreibung**

GEBIET DER ERFINDUNG

Die vorliegende Erfindung betrifft ein Steuerungsverfahren für eine akkubetriebene Handwerkzeugmaschine, eine akkubetriebene Handwerkzeugmaschine und ein Computerprogrammprodukt.

Es sind Handwerkzeugmaschinen bekannt, die Aufnahmen für mehrere Akkueinheiten aufweisen. Dies kann den Vorteil haben, dass eine Reichweite der Handwerkzeugmaschine bei gleicher Leistung erhöht ist, oder aber eine höhere Leistung möglich ist. Zudem kann beispielsweise mit einem einzigen Akkusystem eine Vielzahl unterschiedlicher Geräte, die unterschiedliche Anforderungen haben können, betrieben werden, indem mehrere Akkueinheiten gekoppelt werden.

Allerdings weisen einzelne Akkueinheiten, trotz gleicher Nennwerte, häufig unterschiedliche effektive Leistungswerte, wie Kapazität und Innenwiderstand, auf. Dies kann bereits für fabrikneue Akkueinheiten der Fall sein und wird mit zunehmendem Alter der Akkueinheiten zunehmen, da die Akkueinheiten regelmäßig unterschiedlichen Belastungen und/oder Umweltbedingungen ausgesetzt sind.

Ein Problem bei der Verwendung mehrerer Akkueinheiten ist, dass die Systemleistung beispielsweise durch die Akkueinheit mit der geringsten Leistung begrenzt wird. Da die aktuellen Leistungswerte und der Alterungszustand einer Akkueinheit von außen nicht ersichtlich sind, wird es im Betrieb daher häufig vorkommen, dass eine sehr gute Akkueinheit, die beispielsweise fabrikneu ist, mit einer relativ schwachen Akkueinheit, die beispielsweise bereits seit einiger Zeit verwendet wird und nur noch 50% der ursprünglichen Leistung aufweist, kombiniert wird. Dies kann nicht nur die Leistung des Systems beeinträchtigen, sondern auch die Alterung der neuen Akkueinheit deutlich beschleunigen.

Vor diesem Hintergrund besteht die Aufgabe der vorliegenden Erfindung, ein verbessertes Steuerungsverfahren für eine Handwerkzeugmaschine vorzuschlagen.

OFFENBARUNG DER ERFINDUNG

Gemäß einem ersten Aspekt wird ein Steuerungsverfahren für eine akkubetriebene Handwerkzeugmaschine vorgeschlagen. In einem ersten Schritt wird ein jeweiliger Zustandsparameter einer Anzahl von mit der Handwerkzeugmaschine über eine jeweilige Stromleitung elektrisch parallel verbundenen Akkueinheiten ermittelt. In einem zweiten Schritt wird ein jeweiliges Steuersignal für jede verbundene Akkueinheit in Abhängigkeit des ermittelten Zustandsparameters ermittelt. In einem dritten Schritt wird ein Schaltzustand eines in der jeweiligen Stromleitung angeordneten Schalters in Abhängigkeit des jeweiligen Steuersignals geschaltet.

Die Handwerkzeugmaschine ist insbesondere dazu eingerichtet, mehr als eine Akkueinheit aufzunehmen, insbesondere um die Reichweite der Handwerkzeugmaschine zu verlängern. Beispielsweise weist die Handwerkzeugmaschine eine entsprechend ausgebildete Aufnahmebucht auf und/oder kann mit einem Adapter zum Aufnehmen mehrerer Akkueinheiten gekoppelt werden. Die Handwerkzeugmaschine kann aber auch mit nur einer Akkueinheit betrieben werden. Die Anzahl an Akkueinheiten kann dementsprechend eine, zwei oder auch mehr als zwei Akkueinheiten umfassen.

Es handelt sich bei den Akkueinheiten um solche, die eine gleiche nominelle Ausgangsspannung aufweisen, also beispielsweise Lithium-Ionen-Akkueinheiten mit 5 Zellen in Reihenschaltung, was eine nominelle Ausgangsspannung von etwa 18 V ergibt. Unter "nomineller Ausgangsspannung" wird hierbei insbesondere die Ausgangsspannung verstanden, die die Akkueinheit in einem idealen Zustand erreicht. Im Betrieb hängt die effektive Ausgangsspannung von verschiedenen Faktoren, wie Alterungszustand, Ladezustand, Entnahmestrom, Temperatur und dergleichen mehr ab. Die Nennkapazitäten der Akkueinheiten kann allerdings unterschiedlich sein, so kann beispielsweise eine Akkueinheit mit 2 Ah und eine Akkueinheit mit 3 Ah gemeinsam verwendet werden.

Nachfolgend wird das Steuerungsverfahren zur Verdeutlichung anhand von zwei mit der Handwerkzeugmaschine gekoppelten Akkueinheiten beschrieben, ohne dass dies einschränkend auszulegen ist. Das Steuerungsverfahren kann entsprechend mit mehr als zwei Akkueinheiten durchgeführt werden.

Das Steuerungsverfahren weist den Vorteil auf, dass die Akkueinheiten je nach ihrem Zustand belastet werden. Insbesondere kann eine Akkueinheit mit einem schlechteren Zustand weniger als eine Akkueinheit mit einem besseren Zustand belastet werden. Durch das Steuerungsverfahren kann einerseits eine Optimierung der Leistung und/oder Reichweite der Handwerkzeugmaschine erzielt werden und es kann andererseits vermieden werden, dass eine ältere oder schlechtere Akkueinheit die Leistung und/oder Reichweite der Handwerkzeugmaschine im Betrieb limitiert. Zudem kann es vermieden werden, dass eine gute Akkueinheit, die in Kombination mit einer schlechten Akkueinheit verwendet wird, vorzeitig altert, so dass eine Lebensdauer der guten Akkueinheit verbessert ist.

Der Zustandsparameter umfasst insbesondere eine aktuelle Klemmenspannung, einen zeitlichen Verlauf der Klemmenspannung, einen aktuellen Ladezustand, einen zeitlichen Verlauf des Ladezustands, einen Innenwiderstand, einen maximalen Entladestrom, eine Anzahl von durchgeführten Ladezyklen, eine effektive maximale Ladekapazität und/oder eine aktuelle Temperatur der jeweiligen Akkueinheit. Der aktuelle Ladezustand der Akkueinheit bezieht sich hierbei insbesondere auf eine aktuelle Restkapazität der Akkueinheit.

Im Betrieb altern Akkueinheiten sowohl bei einem Entladevorgang als auch bei einem Ladevorgang.

Die Alterung hängt insbesondere von der Temperatur ab, wobei eine höhere Temperatur die Alterung beschleunigt. Durch das Laden oder Entladen der Akkueinheit wird diese erwärmt, da an dem Innenwiderstand der Akkueinheit elektrische Leistung in Wärme umgewandelt wird. Es ist daher bevorzugt, die Temperatur der Akkueinheit gering zu halten, was beispielsweise durch einen möglichst geringen Entladestrom erreicht werden kann.

Durch die Parallelschaltung der Akkueinheiten ergibt sich bei gleichzeitig zugeschalteten Akkueinheiten der Vorteil eines geringeren effektiven Innenwiderstands, da die einzelnen Innenwiderstände der Akkueinheiten einer elektrischen Parallelschaltung entsprechen. Das heißt, dass in Intervallen, in denen wenigstens zwei Schalter gleichzeitig geschlossen sind, ein Betriebsstrom für einen Elektromotor der Handwerkzeugmaschine effizienter bereitgestellt werden kann, da in den Akkueinheiten ein geringerer Verlust auftritt.

In dem Fall, dass alle Akkueinheiten den gleichen Zustand aufweisen, können beispielsweise alle Schalter geschlossen sein, da dann der vorgenannte Effekt maximiert wird.

Gemäß einer Ausführungsform des Steuerungsverfahrens umfasst der Zustandsparameter eine Klemmenspannung und/oder einen zeitlichen Verlauf der Klemmenspannung der Akkueinheit.

Die Klemmenspannung der Akkueinheit ist ein Indikator für den Gesamtzustand der Akkueinheit. Beispielsweise bei Lithium-Ionen-Akkueinheiten sinkt die Klemmenspannung mit abnehmendem Ladezustand, der sich beispielsweise auf Basis des zeitlichen Verlaufs der Klemmenspannung ermitteln lässt.

Akkueinheiten, deren Klemmenspannungen sehr unterschiedlich sind, sollten nicht in einer Parallelschaltung betrieben werden, da es ansonsten zu einem Stromfluss zwischen den Akkueinheiten kommen kann, was die Akkueinheiten zusätzlich belastet und damit altern lässt.

In Ausführungsformen wird das Steuersignal derart ermittelt, dass mindestens die Akkueinheit mit der höchsten Klemmenspannung zugeschaltet ist.

In Ausführungsformen wird das Steuersignal derart ermittelt, dass eine Akkueinheit, deren Klemmenspannung um mehr als ein vorbestimmter Schwellwert von der Klemmenspannung der Akkueinheit mit der höchsten Klemmenspannung abweicht, abgeschaltet wird.

Gemäß einer weiteren Ausführungsform des Steuerungsverfahrens umfasst der Zustandsparameter einen aktuellen Ladezustand und/oder einen zeitlichen Verlauf des Ladezustands der Akkueinheit.

In dem Fall, dass von beispielsweise zwei Akkueinheiten die erste einen guten Ladezustand aufweist und die zweite einen schlechten Ladezustand aufweist, kann eine Optimierung, wie nachfolgend erläutert, erreicht werden. Der Ladezustand einer Akkueinheit korreliert insbesondere mit der Klemmenspannung der Akkueinheit, wobei die Klemmenspannung mit abnehmendem Ladezustand und mit zunehmender Belastung sinkt. Durch die Parallelschaltung der beiden Akkueinheiten kann unter Last nun ein Zustand auftreten, in dem die Klemmenspannung der ersten Akkueinheit einen höheren Wert aufweist als die Klemmenspannung der zweiten Akkueinheit. Dies kann einen Stromfluss von der ersten zu der zweiten Akkueinheit verursachen. Dieser Zustand sollte vermieden werden, da damit die erste Akkueinheit deutlich stärker belastet wird. Dies wird beispielsweise dadurch erreicht, dass die zweite Akkueinheit nur dann zugeschaltet wird, wenn ein Unterschied in der Klemmenspannung der ersten Akkueinheit und der zweiten Akkueinheit innerhalb eines vorgegebenen Intervalls liegt.

Es sei angemerkt, dass das Steuersignal ferner in Abhängigkeit weiterer Parameter ermittelt werden kann, insbesondere in Abhängigkeit einer Betätigung eines Hauptschalters der Handwerkzeugmaschine.

In Ausführungsformen wird das Steuersignal derart ermittelt, dass wenigstens die Akkueinheit mit der geringsten Temperatur zugeschaltet ist.

In weiteren Ausführungsformen wird das Steuersignal auf Basis einer Kombination der Klemmenspannung, des Ladezustands und der Temperatur für eine jeweilige Akkueinheit ermittelt.

Gemäß einer weiteren Ausführungsform des Steuerungsverfahrens umfasst das jeweilige Steuersignal ein Modulationssignal mit einem High-Pegel und einem Low-Pegel, wobei der Schalter bei dem High-Pegel in einen geschlossenen Zustand versetzt wird und bei dem Low-Pegel in einen geöffneten Zustand versetzt wird.

Gemäß einer weiteren Ausführungsform des Steuerungsverfahrens wird jedes Steuersignal mit einem jeweiligen Tastverhältnis bereitgestellt.

Das Tastverhältnis bezeichnet das Verhältnis einer Dauer des High-Pegels zu einer Dauer des Low-Pegels in Bezug auf ein bestimmtes Bezugs-Zeitintervall. Das Tastverhältnis kann auch als Tastgrad bezeichnet werden. Beispielsweise dauert das Bezugs-Zeitintervall 100 ms. Ein Tastgrad von 65% bedeutet dann, dass für 65 ms der High-Pegel vorliegt und für 35 ms der Low-Pegel vorliegt.

Gemäß einer weiteren Ausführungsform des Steuerungsverfahrens umfasst das Steuersignal ein PWM-Signal.

PWM steht für Pulsweitenmodulation und bezeichnet ein bestimmtes Modulationsverfahren. Die Pulsweitenmodulation kann auch als Pulsbreitenmodulation (PBM), Pulsdauermodulation (PDM), Pulslängenmodulation (PLM) oder Unterschwingungsverfahren bezeichnet werden.

Bei der PWM wird bei konstanter Frequenz ein Rechteckimpuls moduliert, dessen Weite, (oder auch Breite oder Länge) variiert. Das Verhältnis zwischen Impuls und Pause entspricht dem Tastgrad.

Gemäß einer weiteren Ausführungsform des Steuerungsverfahrens umfasst die Anzahl wenigstens eine erste Akkueinheit und eine zweite Akkueinheit, wobei ein erstes Steuersignal für einen ersten der ersten Akkueinheit zugeordneten Schalter und ein zweites Steuersignal für einen zweiten der zweiten Akkueinheit zugeordneten Schalter derart ermittelt werden, dass es im Betrieb der Handwerkzeugmaschine Zeitpunkte gibt, zu denen beide Steuersignale den High-Pegel aufweisen.

Bei dieser Ausführungsform sind zumindest zeitweise beide Akkueinheiten zeitgleich zugeschaltet, was die zuvor beschriebene Effizienzsteigerung ermöglicht.

Gemäß einer weiteren Ausführungsform des Steuerungsverfahrens umfasst die Anzahl wenigstens zwei Akkueinheiten, wobei die jeweiligen Steuersignale in Abhängigkeit einer Entladekurve der jeweiligen Akkueinheit derart ermittelt werden, dass die Akkueinheiten zu einem gleichen Zeitpunkt einen Entladezustand erreichen.

Die Entladekurve der jeweiligen Akkueinheit ist insbesondere vorgegeben, beispielsweise wird diese von einem Hersteller der Akkueinheit ermittelt. Die Entladekurve kann in Form einer Tabelle, eines Graphen, einer parametrischen Darstellung und dergleichen mehr vorliegen. Die Entladekurve stellt beispielsweise die Klemmenspannung in Abhängigkeit der einer aktuellen Kapazität dar. Damit kann von der Klemmenspannung auf den aktuellen Ladezustand geschlossen werden und es kann extrapoliert werden, wie lange die Akkueinheit bei einer bestimmten Last noch Strom bereitstellen kann. Die Entladekurve kann dabei eine Kurvenschar für unterschiedliche Lastzustände umfassen.

Der Entladezustand bezeichnet denjenigen Zustand einer Akkueinheit, in dem diese nicht weiter entladen werden sollte, um eine Beschädigung, wie eine Tiefentladung oder dergleichen, zu vermeiden. Eine entladene Akkueinheit kann mit einem geeigneten Ladegerät wieder aufgeladen werden.

Diese Ausführungsform ermöglicht es, dass Akkueinheiten mit unterschiedlichen Nennkapazitäten und/oder unterschiedlichen effektiven Kapazitäten optimal miteinander verwendet werden können. Die Reichweite der Handwerkzeugmaschine ist damit optimiert.

Es sei angemerkt, dass die Entladekurve nicht zwingend notwendig ist, um auf den Ladezustand zu schließen. Es kann eine generische Kurve, die für einen bestimmten Akkutyp näherungsweise das Entladeverhalten beschreibt, zur näherungsweisen Ermittlung des Ladezustands verwendet werden.

Gemäß einer weiteren Ausführungsform des Steuerungsverfahrens wird das jeweilige Steuersignal in Abhängigkeit einer Schaltposition eines Bedienelements ermittelt.

Beispielsweise weist das Bedienelement wenigstens zwei unterschiedliche Schaltpositionen auf. In einer ersten Schaltposition wird das jeweilige Steuersignal zur Optimierung der Leistung und/oder Reichweite der Handwerkzeugmaschine und zur Reduzierung der Alterung der Akkueinheiten, wie zuvor beschrieben, ermittelt. In einer zweiten Schaltposition wird das jeweilige Steuersignal zur Maximierung der Leistung Handwerkzeugmaschine ermittelt. Das heißt insbesondere, dass eine schnellere Alterung der Akkueinheiten in Kauf genommen wird. Beispielsweise sind in der zweiten Schaltposition die Schalter immer geschlossen, so dass ein maximaler Strom für den Elektromotor zu Verfügung steht.

Die Schaltpositionen des Bedienelements können auch als unterschiedliche Schaltstellungen oder Betriebsmodi bezeichnet werden. Die vorstehend beschriebenen zwei Schaltstellungen können beispielsweise als Eco-Modus und als Power-Modus bezeichnet werden.

Es kann auch ein Hybrid-Modus vorgesehen sein, bei dem beispielsweise bei einer Betätigung eines Drehmomentreglers bis zu 90% der Eco-Modus aktiv ist und bei einer Betätigung des Drehmomentreglers über 90% der Power-Modus aktiv ist. Vorzugsweise ist bei der Schwelle, in dem Beispiel also bei 90%, für den Benutzer ein erhöhter Widerstand bei dem Betätigen des Drehmomentreglers zu spüren.

Gemäß einer weiteren Ausführungsform des Steuerungsverfahrens wird das jeweilige Steuersignal in einem Bremsbetrieb der Handwerkzeugmaschine derart ermittelt wird, dass ein generierter Strom zum Aufladen der Akkueinheit mit der niedrigsten Klemmenspannung und/oder mit dem niedrigsten Ladezustand zugeführt wird.

Unter einem Bremsbetrieb wird beispielsweise verstanden, dass eine rotierende Masse der Handwerkzeugmaschine nach dem Loslassen des An-/Aus-Schalters abgebremst wird. Dies erhöht einerseits die Sicherheit der Handwerkzeugmaschine, andererseits kann in dem Bremsbetrieb der Elektromotor als ein Generator fungieren. Die Rotationsenergie der rotierenden Masse wird dabei zumindest teilweise in elektrische Energie umgewandelt. Diese elektrische Energie kann zum Laden der Akkueinheiten verwendet werden.

Gemäß einem zweiten Aspekt wird eine akkubetriebene Handwerkzeugmaschine mit einer Aufnahmebucht zur wiederlösbaren Aufnahme einer ersten Akkueinheit und einer zweiten Akkueinheit vorgeschlagen. Die erste Akkueinheit ist über eine erste Stromleitung und die zweite Akkueinheit ist über eine zweite Stromleitung in einer elektrischen Parallelschaltung mit der Handwerkzeugmaschine verbindbar. In der ersten Stromleitung ist ein erster Schalter angeordnet und in der zweiten Stromleitung ist ein zweiter Schalter angeordnet. Der erste Schalter und der zweite Schalter sind durch ein jeweiliges Steuersignal in einen geöffneten Schaltzustand, in dem die zugeordnete Akkueinheit elektrisch von der Handwerkzeugmaschine getrennt ist, oder einen geschlossenen Schaltzustand, in dem die zugeordnete Akkueinheit elektrisch mit der Handwerkzeugmaschine verbunden ist, versetzbar. Die Handwerkzeugmaschine wird insbesondere gemäß dem Steuerungsverfahren gemäß dem ersten Aspekt betrieben.

Die für das Steuerungsverfahren beschriebenen Ausführungsformen und Merkmale gelten für die Handwerkzeugmaschine entsprechend und umgekehrt.

Es sei angemerkt, dass die Handwerkzeugmaschine nicht auf die Verwendung von höchstens zwei Akkueinheiten beschränkt ist. Vielmehr kann die Aufnahmebucht zur wiederlösbaren Aufnahme von drei oder mehr Akkueinheiten ausgebildet sein, wobei jeder Akkueinheit eine Stromleitung mit einem Schalter zugeordnet ist.

Gemäß einer Ausführungsform der akkubetriebenen Handwerkzeugmaschine umfasst diese eine Steuerungsvorrichtung, die zum Ermitteln eines Zustandsparameters der ersten Akkueinheit und der zweiten Akkueinheit und zum Bereitstellen des jeweiligen Steuersignals in Abhängigkeit des ermittelten Zustandsparameters eingerichtet ist.

Die Steuerungsvorrichtung ist insbesondere als ein integriertes elektronisches Bauelement ausgebildet, beispielsweise als ein ASIC (application specific integrated circuit) oder ein PLC (programmable logic controller).

Gemäß einer Ausführungsform der akkubetriebenen Handwerkzeugmaschine sind die Schalter als Halbleiter-Bauelemente, insbesondere als MOSFET, ausgebildet.

Gemäß einer weiteren Ausführungsform der akkubetriebenen Handwerkzeugmaschine weist die erste Akkueinheit eine größere Kapazität als die zweite Akkueinheit auf.

Die Kapazität umfasst hierbei sowohl eine Nennkapazität als auch eine effektive Kapazität.

Gemäß einem weiteren Aspekt wird ein Computerprogrammprodukt vorgeschlagen, welches Befehle umfasst, die bei der Ausführung des Programms durch einen Computer diesen veranlassen, das Steuerungsverfahren gemäß dem ersten Aspekt auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

KURZE BESCHREIBUNG DER FIGUREN

Die nachfolgende Beschreibung erläutert die Erfindung anhand von exemplarischen Ausführungsformen und Figuren. In den Figuren zeigt:

Fig. 1    eine schematische Schaltungstopologie für eine akkubetriebene Handwerkzeugmaschine;

Fig. 2    ein beispielhaftes Diagramm mit zwei Entladekurven von Akkueinheiten;

Fig. 3    ein beispielhaftes Diagramm mit einer Entladekurve einer Akkueinheit;

Fig. 4    ein Diagramm mit zwei Entladekurven von Akkueinheiten und zwei Diagramme mit jeweils einem Steuersignal;

Fig. 5    ein schematisches Blockschaltbild eines Steuerungsverfahrens für eine akkubetriebene Handwerkzeugmaschine; und

Fig. 6    eine schematische Darstellung einer akkubetriebenen Handwerkzeugmaschine.

Gleiche oder funktionsgleiche Elemente werden durch gleiche Bezugszeichen in den Figuren indiziert, soweit nicht anders angegeben.

AUSFÜHRUNGSFORMEN DER ERFINDUNG

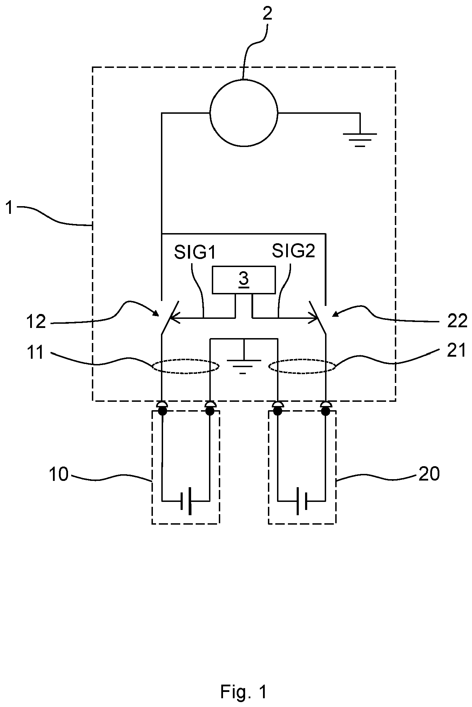

Fig. 1 zeigt eine schematische Schaltungstopologie für eine akkubetriebene Handwerkzeugmaschine 1. Die Handwerkzeugmaschine 1 ist insbesondere als eine Bohrmaschine, ein Schlagbohrer, ein Bohrhammer, eine Handkreissäge, eine Stichsäge, eine Fuchsschwanzsäge, ein Trennschleifer, ein Rührwerk oder dergleichen ausgebildet. Das Werkzeug (nicht dargestellt) der Handwerkzeugmaschine 1 wird von einem Elektromotor 2 angetrieben. Der Elektromotor 2 wird von einer im Betrieb mit der Handwerkzeugmaschine 1 gekoppelten Akkueinheit 10, 20 mit elektrischer Energie versorgt. Eine Steuerungsvorrichtung 3 ist zum Steuern der Handwerkzeugmaschine 1 eingerichtet.

In dem dargestellten Beispiel sind zwei Akkueinheiten 10, 20 mit der Handwerkzeugmaschine 1 gekoppelt. Eine erste Akkueinheit 10 ist hierbei über eine erste Stromleitung 11 mit der Handwerkzeugmaschine 1 verbunden und die zweite Akkueinheit 20 ist über eine zweite Stromleitung 21 mit der Handwerkzeugmaschine 1 verbunden. Die beiden Akkueinheiten 10, 20 sind hierbei in einer elektrischen Parallelschaltung angeordnet.

In der ersten Stromleitung 11 ist ein erster Schalter 12 angeordnet und in der zweiten Stromleitung 21 ist ein zweiter Schalter 22 angeordnet. Über den jeweiligen Schalter 12, 22 kann die jeweilige Akkueinheit 10, 20 elektrisch von dem Motor 2 der Handwerkzeugmaschine 1 getrennt werden. Wenn der jeweilige Schalter 12, 22 in dem geöffneten Zustand ist, wie in der Fig. 1 dargestellt, dann wird der jeweiligen Akkueinheit 10, 20 keine elektrische Leistung entnommen oder nur eine geringe elektrische Leistung entnommen, beispielsweise um die Steuerungsvorrichtung 3 mit Strom zu versorgen.

Die Schalter 12, 22 sind insbesondere als Halbleiter-Elemente ausgebildet, wie beispielsweise als MOSFETs. Die Steuerungsvorrichtung 3 ist dazu eingerichtet, die Schalter 12, 22 mit einem jeweiligen Steuerungssignal SIG1, SIG2 anzusteuern. Hierunter wird insbesondere verstanden, dass die Schalter 12, 22 durch das Steuerungssignal SIG1, SIG2 in den leitenden oder den nichtleitenden Zustand versetzt werden.

Die Akkueinheiten 10, 20 sind beispielsweise als Lithium-Ionen-Akkupacks ausbildet, wobei jede Akkueinheit 10, 20 beispielsweise zehn in Reihe geschaltete Einzelzellen aufweist, womit jede Akkueinheit 10, 20 eine nominelle Ausgangsspannung von 36 V aufweist.

Die Handwerkzeugmaschine 1 kann insbesondere auch mit nur einer Akkueinheit 10, 20 betrieben werden (nicht dargestellt). Es sei angemerkt, dass in der schematischen Darstellung der Fig. 1 viele elektronische Bauelemente und Verbindung aus Gründen der Übersicht nicht dargestellt sind, wie beispielsweise Spannungsmesseinrichtungen zum Erfassen einer jeweiligen Klemmenspannung, Strommesseinrichtungen zum Erfassen eines jeweiligen Entladestroms, Temperatursensoren zum Erfassen einer jeweiligen Temperatur und dergleichen mehr.

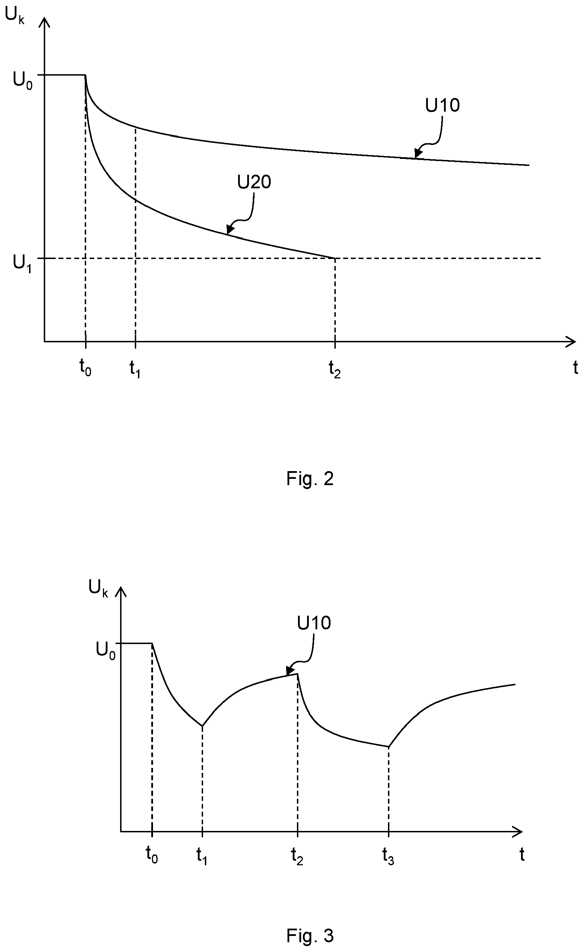

Fig. 2 zeigt ein beispielhaftes Diagramm mit zwei Entladekurven U10, U20 von Akkueinheiten 10, 20 (siehe Fig. 1), die beispielsweise gleiche Kennzahlen, wie nominelle Ausgangsspannung und Nenn-Kapazität, aber unterschiedliche Zustände, insbesondere Alterungszustände, aufweisen. In dem Diagramm ist beispielhaft die Klemmenspannung Uk gegen die Zeit t bei einem Entladevorgang aufgetragen. Die Kurve U10 entspricht beispielsweise einer fabrikneuen Akkueinheit 10 und die Kurve U20 entspricht beispielsweise einer bereits gealterten Akkueinheit 20. Die gealterte Akkueinheit 20 weist beispielsweise einen erhöhten Innenwiderstand und eine gegenüber der Nenn-Kapazität deutlich reduzierte effektive Kapazität auf. Das heißt, dass die gealterte Akkueinheit 20 auch in vollständig geladenem Zustand nur noch einen Bruchteil der ursprünglichen Nenn-Kapazität aufweist. Zum Zeitpunkt t0 beginnt der Entladevorgang für beide Akkueinheiten 10, 20, wobei beispielsweise beiden Akkueinheiten 10, 20 der gleiche Strom entnommen wird. Zu diesem Zeitpunkt t0 weisen beide Akkueinheiten 10, 20 insbesondere einen gleichen relativen Ladezustand auf, das heißt, sie sind beide vollständig geladen. In diesem Zustand weisen beiden Akkueinheiten 10, 20 die gleiche Ausgangsspannung U0 auf, beispielsweise 36 V.

Zu Beginn des Entladevorgangs fällt bei beiden Akkueinheiten 10, 20 die jeweilige Klemmenspannung Uk zunächst stark ab. Dieser schnelle Abfall dauert bis zu einem Zeitpunkt t1. Der starke anfängliche Spannungsabfall kann beispielsweise durch einen zunächst schnell ansteigenden Innenwiderstand erklärt werden. Für die Klemmenspannung Uk gilt nachfolgende Gleichung (1):

$$Uk = U0 - Ri*I \qquad \text{Gleichung (1).}$$

Hierbei steht Ri für den Innenwiderstand und I für den der Akkueinheit entnommenen Strom. Der Innenwiderstand Ri steigt zu Beginn der Entladung bei beiden Akkueinheiten 10, 20 zunächst schnell an, da sich durch die chemische Reaktion in den Zellen der Akkueinheit 10, 20 beispielsweise zunächst in der Nähe der Elektroden Bereiche ausbilden, die einen höheren Widerstand aufweisen. Erst nach etwas längerer Stromentnahme haben sich diese Bereiche durch das gesamte Speichermedium der Akkueinheit 10, 20 ausgebreitet, so dass dann ein quasi-statischer Zustand erreicht wird. In diesem Zustand nimmt der Innenwiderstand Ri noch langsam weiter zu, da beispielsweise das entladene Medium den Strom schlechter leitet als das geladene Medium, weshalb die Klemmenspannung weiter abfällt. Da die gealterte Akkueinheit 20 bereits im voll geladenen Zustand einen höheren Anteil an ungeladenem Medium aufweist, ist auch der Innenwiderstand Ri von Beginn an höher und damit der Spannungsabfall stärker.

Zum Zeitpunkt t2 erreicht die gealterte Akkueinheit 20 in diesem Beispiel die Spannung U1, die beispielhaft als die Untergrenze für die Klemmenspannung Uk gesetzt ist, bei der der Entladevorgang beendet werden muss, um eine dauerhafte Beschädigung oder Zerstörung der Akkueinheit 20 zu vermeiden.

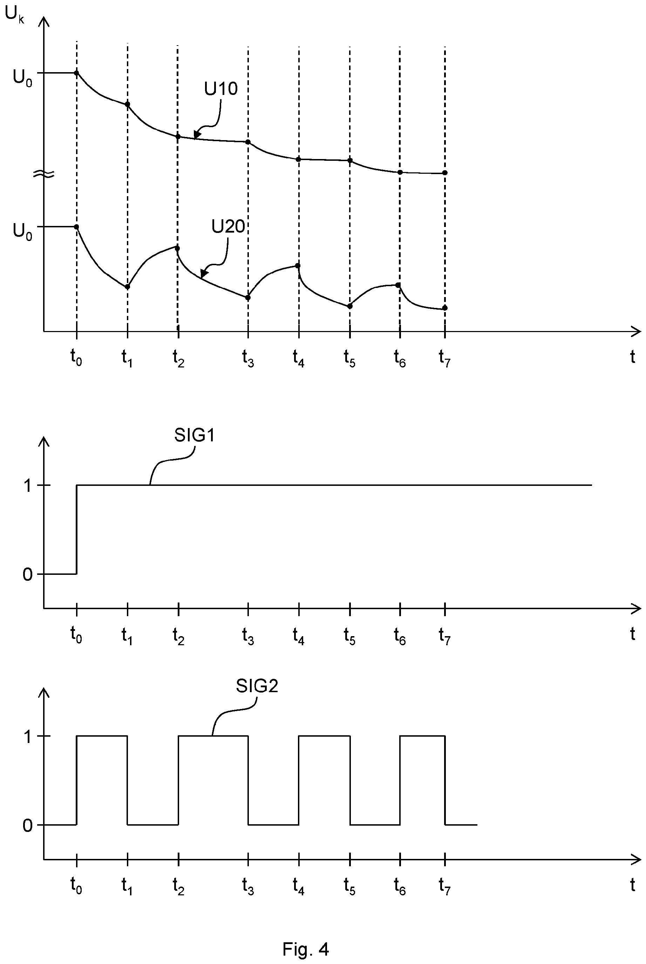

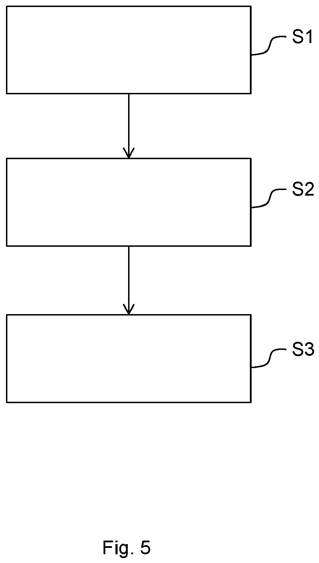

Wären die beiden Akkueinheiten 10, 20 parallel in einer Handwerkzeugmaschine 1 (siehe Fig 1) im Einsatz, müsste bereits zu diesem Zeitpunkt t2 die Arbeit beendet werden. Durch das nachfolgend anhand der Fig. 4 und 5 erläuterte Steuerungsverfahren lässt sich dies vermeiden.

Fig. 3 zeigt ein beispielhaftes Diagramm mit einer Entladekurve U10 einer Akkueinheit 10, 20 (siehe Fig. 1). In diesem Beispiel wird nur jeweils für kurze Intervalle t0 - t1 und t2 - t3 ein Strom entnommen. In den Intervallen t1 - 12 und nach t3 wird kein Strom entnommen.

Es ist ersichtlich, dass die Klemmenspannung Uk mit der Stromentnahme zunächst stark abfällt, wie anhand der Fig. 2 erläutert. Wenn die Stromentnahme zum Zeitpunkt t1 beendet wird, dann "erholt" sich die Klemmenspannung Uk langsam wieder. Dies ist darauf zurückzuführen, dass sich die Bereiche mit erhöhtem Widerstand, die den Innenwiderstand schnell ansteigen lassen, wieder auflösen. Man kann auch sagen, dass die Akkueinheit relaxiert. Die Relaxation erfolgt insbesondere durch Ladungs- und/oder Teilchendiffusion.

Dieser Effekt kann in dem Steuerungsverfahren genutzt werden, um zwei Akkueinheiten 10, 20 mit unterschiedlichem Zustand optimal gemeinsam zu verwenden.

Fig. 4 zeigt ein Diagramm mit zwei Entladekurven U10, U20 von zwei Akkueinheiten 10, 20 (siehe Fig. 1) und zwei Diagramme mit jeweils einem Steuersignal SIG1, SIG2. Die dargestellten Diagramme entsprechen beispielsweise einem Betrieb der Handwerkzeugmaschine 1 der Fig. 1.

In dem oberen Diagramm ist als der Zustandsparameter die jeweilige Klemmenspannung Uk der Akkueinheiten 10, 20 dargestellt. Es handelt sich beispielsweise um eine neue Akkueinheit 10 (Kurve U10) und eine gealterte Akkueinheit 20 (Kurve U20). Es sei angemerkt, dass die Skala auf der vertikalen Achse unterbrochen ist, so dass die beiden Kurven U10, U20 getrennt voneinander darstellbar sind. Die Diagramme mit den Steuersignalen SIG1, SIG2 weisen die gleiche Zeitachse t wie das Diagramm der Entladekurven U10, U20 auf.

Zum Zeitpunkt t0 wird die Handwerkzeugmaschine 1 in Betrieb genommen, das heißt, es wird den Akkueinheiten 10, 20 elektrische Energie entnommen. Zunächst weisen beide Akkueinheiten 10, 20 die gleiche Ausgangsspannung U0 auf. Daher werden beide Akkueinheiten 10, 20 zugeschaltet. Dies erfolgt, indem die Schalter 12, 22 mittels des jeweiligen Steuersignals SIG, SIG2 geschlossen werden, indem die Pegel der beiden Steuersignale SIG1, SIG2 auf "1" oder "high" gesetzt werden. Zunächst fällt die Klemmenspannung Uk beider Akkueinheiten 10, 20 stark ab, wobei der Abfall der Ausgangsspannung U20 der gealterten Akkueinheit 20 schneller erfolgt als jener der neuen Akkueinheit 10.

Zum Zeitpunkt t1 übersteigt der Unterschied in den Ausgangsspannungen U10, U20 einen vorgegebenen Grenzwert. Zu diesem Zeitpunkt t1 wird daher der Schalter 22 der gealterten Akkueinheit 20 geöffnet, indem der Pegel des Steuersignals SIG2 auf "0" oder "low" gesetzt wird. Zu diesem Zeitpunkt t1 muss nunmehr die neue Akkueinheit 10 alleine den Strom für den Betrieb der Handwerkzeugmaschine 1 aufbringen. Der höhere Strom für zu einem höheren Spannungsabfall an dem Innenwiderstand der Akkueinheit 10, weshalb die Ausgangsspannung U10 nun etwas stärker abfällt.

Die gealterte Akkueinheit 20 erholt sich im unbelasteten Zustand etwas, wie anhand der Fig 3 beschrieben, weshalb die Ausgangsspannung U20 wieder ansteigt. Nach einer bestimmten Zeitspanne, zum Zeitpunkt t2, hat die gealterte Akkueinheit 20 beispielsweise die gleiche Ausgangsspannung U20 wie die Akkueinheit 10, weshalb sie wieder zugeschaltet wird. Entsprechend wird der Pegel des Steuersignals SIG2 wieder auf "1" gesetzt. Das Zuschalten der Akkueinheit 20 hat den Effekt, dass der effektive Innenwiderstand der Anordnung der Akkueinheiten 10, 20 reduziert ist, weshalb bei gleichem Entnahmestrom ein geringerer Spannungsabfall erfolgt.

Wenn nach einer gewissen Dauer der Schwellwert für den Unterschied der beiden Ausgangsspannungen U10, U20 wieder unterschritten wird, wird die gealterte Akkueinheit 20 wieder elektrisch von der Handwerkzeugmaschine 1 getrennt, indem das Steuersignal SIG2 auf "0" gesetzt wird.

Auf diese Weise kann erreicht werden, dass die beiden Akkueinheiten 10, 20 ihrem Zustand gemäß beansprucht werden und dass beide Akkueinheiten 10, 20 in etwa zum gleichen Zeitpunkt leer sind. Die Leistung der Handwerkzeugmaschine 1 wird daher vorteilhaft nicht durch eine schlechte oder gealterte Akkueinheit 10, 20 begrenzt.

Die Zeitdauer zwischen einem Zuschalten und Abschalten, also zwischen einem Umschalten von einem hohen zu einem niedrigen oder von einem niedrigen zu einem hohen Signalpegel, kann hierbei in einem Bereich zwischen 1 ms - 60 s liegen. Es kann beispielsweise sehr schnell geschaltet werden, wobei jede Millisekunde umgeschaltet werden kann, oder aber es wird mit einer langsameren Frequenz umgeschaltet. Dies kann sowohl von dem Zustand der Akkueinheiten 10, 20 im Vergleich zueinander als auch von dem verwendeten Akkutyp (zum Beispiel Li-Ion, NiCd, NiMh, Blei) abhängen.

Fig. 5 zeigt ein schematisches Blockschaltbild eines Steuerungsverfahrens für eine akkubetriebene Handwerkzeugmaschine 1 (siehe Fig. 1). In einem ersten Schritt S1 wird ein jeweiliger Zustandsparameter U10, U20 (siehe Fig. 2-4) einer Anzahl von mit der Handwerkzeugmaschine 1 über eine jeweilige Stromleitung 11, 21 (siehe Fig. 1) elektrisch parallel verbundenen Akkueinheiten 10, 20 (siehe Fig. 1) ermittelt. Beispielsweise werden jeweils eine Klemmenspannung Uk (siehe Fig. 2-4) und eine Temperatur ermittelt. In einem zweiten Schritt S2 wird ein jeweiliges Steuersignal SIG1, SIG2 (siehe Fig. 4) für jede verbundene Akkueinheit 10, 20 in Abhängigkeit des ermittelten Zustandsparameters U10, U20 ermittelt. In einem dritten Schritt S3 wird ein Schaltzustand eines in der jeweiligen Stromleitung 11, 21 angeordneten Schalters 12, 22 (siehe Fig. 1) in Abhängigkeit des jeweiligen Steuersignals SIG1, SIG2 geschaltet. Beispielsweise wird das Steuersignal SIG1, SIG2 derart ermittelt, dass die Akkueinheit 10, 20 mit der höheren Klemmenspannung Uk zugeschaltet ist, solange ihre Temperatur unter einem vorbestimmten Schwellwert bleibt, und dass die Akkueinheit 10, 20 mit der geringeren Klemmenspannung Uk intermittierend zu- und abgeschaltet wird, wenn ihre Klemmenspannung Uk einen vorbestimmten Abstand zu der Klemmenspannung Uk der weiteren Akkueinheit 10, 20 unterschreitet.

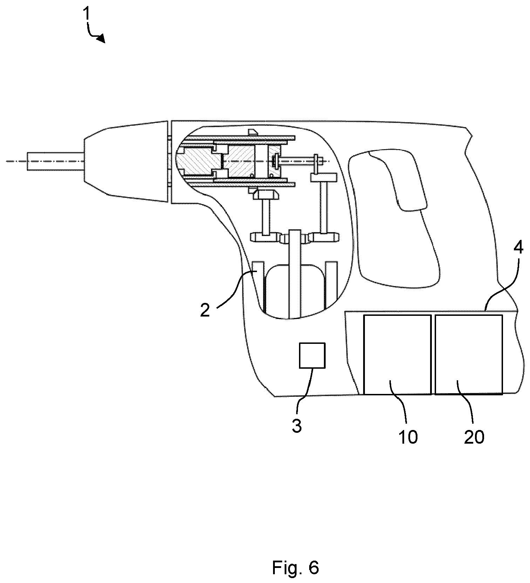

Fig. 6 zeigt eine schematische Darstellung einer akkubetriebenen Handwerkzeugmaschine 1. Die dargestellte Handwerkzeugmaschine 1 weist insbesondere eine Aufnahmebucht 4 zur Aufnahme von zwei Akkueinheiten 10, 20 auf. Die Handwerkzeugmaschine 1 weist eine interne Verdrahtung gemäß der Schaltungstopologie der Fig. 1 auf. Die Handwerkzeugmaschine 1 ist insbesondere mittels der Steuerungsvorrichtung 3 dazu eingerichtet, wie anhand der Fig. 1, der Fig. 4 und der Fig. 5 beschrieben, betrieben zu werden.

BEZUGSZEICHENLISTE

| 1 | akkubetriebene Handwerkzeugmaschine |
|---|---|
| 2 | Elektromotor |
| 3 | Steuerungsvorrichtung |
| 4 | Aufnahmebucht |
| 10 | Akkueinheit |
| 11 | Stromleitung |

| 12 | Schalter |
|----|----------|
| 20 | Akkueinheit |
| 21 | Stromleitung |
| 22 | Schalter |

| S1 | Verfahrensschritt |
|----|-------------------|
| S2 | Verfahrensschritt |
| S3 | Verfahrensschritt |
| SIG1 | Steuersignal |
| SIG2 | Steuersignal |
| t | Zeit |
| t0 | Zeitpunkt |
| t1 | Zeitpunkt |
| t2 | Zeitpunkt |
| t3 | Zeitpunkt |
| t4 | Zeitpunkt |
| t5 | Zeitpunkt |
| t6 | Zeitpunkt |
| t7 | Zeitpunkt |
| U0 | Spannungswert |
| U1 | Spannungswert |
| U10 | Zustandsparameter |
| U20 | Zustandsparameter |
| Uk | Klemmenspannung |

**Patentansprüche**

1. Steuerungsverfahren für eine akkubetriebene Handwerkzeugmaschine (1), mit:

   Ermitteln (S1) eines jeweiligen Zustandsparameters (U10, U20) einer Anzahl von mit der Handwerkzeugmaschine (1) über eine jeweilige Stromleitung (11, 21) elektrisch parallel verbundenen Akkueinheiten (10, 20),
   Ermitteln (S2) eines jeweiligen Steuersignals (SIG1, SIG2) für jede verbundene Akkueinheit (10, 20) in Abhängigkeit des ermittelten Zustandsparameters (U10, U20), und
   Schalten (S3) eines Schaltzustands eines in der jeweiligen Stromleitung (11, 21) angeordneten Schalters (12, 22) in Abhängigkeit des jeweiligen Steuersignals (SIG1, SIG2).

2. Steuerungsverfahren nach Anspruch 1, **dadurch gekennzeichnet, dass** der Zustandsparameter (U10, U20) eine Klemmenspannung (Uk) und/oder einen zeitlichen Verlauf der Klemmenspannung (Uk) der Akkueinheit (10, 20) umfasst.

3. Steuerungsverfahren nach Anspruch 1 oder 2, **dadurch gekennzeichnet, dass** der Zustandsparameter (U10, U20) einen aktuellen Ladezustand und/oder einen zeitlichen Verlauf des Ladezustands der Akkueinheit (10, 20) umfasst.

4. Steuerungsverfahren nach einem der Ansprüche 1 bis 3, **dadurch gekennzeichnet, dass** das jeweilige Steuersignal (SIG1, SIG2) ein Modulationssignal mit einem High-Pegel und einem Low-Pegel umfasst, wobei der Schalter (12, 22) bei dem High-Pegel in einen geschlossenen Zustand versetzt wird und bei dem Low-Pegel in einen geöffneten Zustand versetzt wird.

5. Steuerungsverfahren nach Anspruch 4, **dadurch gekennzeichnet, dass** jedes Steuersignal (SIG1, SIG2) mit einem jeweiligen Tastverhältnis bereitgestellt wird.

6. Steuerungsverfahren nach Anspruch 4 oder 5, **dadurch gekennzeichnet, dass** das Steuersignal (SIG1, SIG2) ein PWM-Signal umfasst.

7. Steuerungsverfahren nach einem der Ansprüche 4 bis 6, **dadurch gekennzeichnet, dass** die Anzahl wenigstens eine erste Akkueinheit (10) und eine zweite Akkueinheit (20) umfasst, wobei ein erstes Steuersignal (SIG1) für einen ersten der ersten Akkueinheit (10) zugeordneten Schalter (12) und ein zweites Steuersignal (SIG2) für einen zweiten der zweiten Akkueinheit (20) zugeordneten Schalter (22) derart ermittelt werden, dass es im Betrieb der Handwerkzeugmaschine Zeitpunkte gibt, zu denen beide Steuersignale (SIG1, SIG2) den High-Pegel aufweisen.

8. Steuerungsverfahren nach einem der Ansprüche 1 bis 7, **dadurch gekennzeichnet, dass** die Anzahl wenigstens zwei Akkueinheiten (10, 20) umfasst, wobei die jeweiligen Steuersignale (SIG1, SIG2) in Abhängigkeit einer Entladekurve der jeweiligen Akkueinheit (10, 20) derart ermittelt werden, dass die Akkueinheiten (10, 20) zu einem gleichen Zeitpunkt einen Entladezustand erreichen.

9. Steuerungsverfahren nach einem der Ansprüche 2 oder 3, **dadurch gekennzeichnet, dass** das jeweilige Steuersignal (SIG1, SIG2) in einem Bremsbetrieb der Handwerkzeugmaschine (1) derart ermittelt wird, dass ein generierter Strom zum Aufladen der Akkueinheit (10, 20) mit der niedrigsten Klemmenspannung (Uk) und/oder dem niedrigsten Ladezustand zugeführt wird.

10. Steuerungsverfahren nach einem der Ansprüche 1 bis 9, **dadurch gekennzeichnet, dass** das jeweilige Steuersignal (SIG1, SIG2) in Abhängigkeit einer Schaltposition eines Bedienelements ermittelt wird.

11. Akkubetriebene Handwerkzeugmaschine (1) mit einer Aufnahmebucht (4) zur wiederlösbaren Aufnahme einer ersten Akkueinheit (10) und einer zweiten Akkueinheit (20), wobei die erste Akkueinheit (10) über eine erste Stromleitung (11) und die zweite Akkueinheit (20) über eine zweite Stromleitung (21) in einer elektrischen Parallelschaltung mit der Handwerkzeugmaschine (1) verbindbar sind, wobei in der ersten Stromleitung (11) ein erster Schalter (12) angeordnet ist und in der zweiten Stromleitung (21) ein zweiter Schalter (22) angeordnet ist, und wobei der erste Schalter (12) und der zweite Schalter (22) durch ein jeweiliges Steuersignal (SIG1, SIG2) in einen geöffneten Schaltzustand oder einen geschlossenen Schaltzustand versetzbar sind, und wobei die Handwerkzeugmaschine (1) insbesondere gemäß dem Steuerungsverfahren nach einem der Ansprüche 1-10 betrieben wird.

12. Akkubetriebene Handwerkzeugmaschine nach Anspruch 11, **gekennzeichnet durch** eine Steuerungsvorrichtung (3), die zum Ermitteln eines Zustandsparameters (U10, U20) der ersten Akkueinheit (10) und der zweiten Akkueinheit (20) und zum Bereitstellen des jeweiligen Steuersignals (SIG1, SIG2) in Abhängigkeit des ermittelten Zustandsparameters (U10, U20) eingerichtet ist.

13. Akkubetriebene Handwerkzeugmaschine nach Anspruch 11 oder 12, **dadurch gekennzeichnet, dass** die Schalter (12, 22) als Halbleiter-Bauelemente, insbesondere als MOSFET, ausgebildet sind.

14. Akkubetriebene Handwerkzeugmaschine nach einem der Ansprüche 11 bis 13, **dadurch gekennzeichnet, dass** die erste Akkueinheit (10) eine größere Kapazität als die zweite Akkueinheit (20) aufweist.

15. Computerprogrammprodukt, welches Befehle umfasst, die bei der Ausführung des Programms durch einen Computer diesen veranlassen, das Verfahren nach einem der Ansprüche 1 bis 10 auszuführen.

Fig. 1

Fig. 2

Fig. 3

Fig. 4

Fig. 5

Fig. 6

Europäisches
Patentamt

European
Patent Office

Office européen
des brevets

## EUROPÄISCHER RECHERCHENBERICHT

Nummer der Anmeldung

EP 20 21 0234

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 100513 A1 (METABOWERKE GMBH [DE]) 12. Juli 2018 (2018-07-12) * Absätze [0001], [0005], [0008], [0037], [0065], [0074], [0087] - [0101] * * Abbildung 2 * ----- | 1,3,7,8, 10-15 | INV. B25F5/00 H02J7/14 |
| X | US 2020/235357 A1 (KATAYAMA JUNICHI [JP]) 23. Juli 2020 (2020-07-23) * Absätze [0138], [0139], [0141], [0154] - [0161], [0180] * * Abbildung 7 * ----- | 1,2, 11-15 | |
| X | WO 2018/031719 A1 (BRIGGS & STRATTON CORP [US]) 15. Februar 2018 (2018-02-15) * Absätze [0055] - [0057], [0082], [0089] * * Abbildungen 6,7 * ----- | 1-15 | |

RECHERCHIERTE SACHGEBIETE (IPC)

B25F
H02J

Der vorliegende Recherchenbericht wurde für alle Patentansprüche erstellt

| Recherchenort | Abschlußdatum der Recherche | Prüfer |
|---|---|---|
| Den Haag | 4. Mai 2021 | Bonnin, David |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 0234

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-2021

| Im Recherchenbericht angeführtes Patentdokument | Datum der Veröffentlichung | Mitglied(er) der Patentfamilie | Datum der Veröffentlichung |
|---|---|---|---|
| DE 102017100513 A1 | 12-07-2018 | KEINE | |
| US 2020235357 A1 | 23-07-2020 | CN 111463841 A<br>DE 102020100997 A1<br>JP 2020119702 A<br>US 2020235357 A1 | 28-07-2020<br>23-07-2020<br>06-08-2020<br>23-07-2020 |
| WO 2018031719 A1 | 15-02-2018 | EP 3497776 A1<br>US 2019160972 A1<br>WO 2018031719 A1 | 19-06-2019<br>30-05-2019<br>15-02-2018 |

Für nähere Einzelheiten zu diesem Anhang : siehe Amtsblatt des Europäischen Patentamts, Nr.12/82

EPO FORM P0461